**Europäisches Patentamt**

**European Patent Office**

**Office européen des brevets**

(19)

(11) Numéro de publication: **0 220 158**
**B1**

(12) **FASCICULE DE BREVET EUROPEEN**

(45) Date de publication du fascicule du brevet: **08.08.90**

(51) Int. Cl.⁵: **H 02 M 7/5387**

(21) Numéro de dépôt: **86870150.9**

(22) Date de dépôt: **16.10.86**

(54) **Convertisseur DC/AC et transformateur utilisé à cet effet.**

(30) Priorité: **17.10.85 BE 215745**

(43) Date de publication de la demande:
**29.04.87 Bulletin 87/18**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**DE-B-1 209 839**
**FR-A-2 522 900**
**GB-A-2 113 475**
**US-A-3 710 229**
**US-A-4 032 832**

(73) Titulaire: **DE BELGISCHE STAAT -L'ETAT BELGE-
vertegenwoordigd door de SECRETARIS-
GENERAAL VAN DE DIENSTEN VOOR
PROGRAMMATIE VAN HET
WETENSCHAPSBELEID Wetenschapsstraat 8
B-1040 Brussel (BE)**

(72) Inventeur: **Baert, Daniel
Polderdreef 27
B-9720 De Pinte (BE)**
Inventeur: **De Visschere, Patrick
Posterijlaan 35
B-8870 Pittem (BE)**
Inventeur: **Kuyken, Hugo
Peter Benoitlaan 64
B-9219 Gentbrugge (BE)**

(74) Mandataire: **Pieraerts, Jacques
Bureau Gevers S.A. rue de Livourne 7 bte 1
B-1050 Bruxelles (BE)**

Courier Press, Leamington Spa, England.

**Description**

Cette invention se rapporte à un convertisseur courant continu/courant alternatif pour application indépendante, comportant un convertisseur de puissance commuté courant continu/courant continu à modulation par impulsions de largeur variable commandé par une unité de contrôle de manière à appliquer à partir d'une tension continue, une tension sinusoïdale redressée à un pont redresseur pour obtenir le courant alternatif désiré, le convertisseur continu/continu commuté contenant un transformateur d'isolement avec des enroulements primaires et secondaires, en particulier du type hautes fréquences et comprenant un filtre inductance-capacité, et l'unité de contrôle comprenant un oscillateur fournissant une tension en dents de scie de période réglable, pouvant être commandée extérieurement, et qui commande alternativement les éléments de commutation du convertisseur de puissance continu/continu, le signal de sortie de cet oscillateur étant également appliqué à une entrée d'un comparateur dont l'autre entrée reçoit un signal d'erreur, le signal de sortie de ce comparateur provoquant, lors du dépassement du signal en dents de scie par le signal d'erreur, l'ouverture de l'élément de commutation formé à ce moment dans le convertisseur de puissance continu/continu jusqu'à la fin de la période suivante.

On décrit, dans le brevet fraiçais 2.522.900, un procédé qui se distingue de l'invention du fait que cette dernière peut mettre en oeuvre un courant déwatté avec un rendement qui approche les 100% parce qu'aucun flux d'énergie supplémentaire ne traverse le convertisseur si bien qu'aucune perte supplémentaire ne se crée. De plus, le convertisseur ne doit pas être conçu pour une puissance supérieure, alors que le circuit est simple et qu'il contient moins de composants pour des solutions similaires.

Le but de l'invention est de décrire un convertisseur courant continu/courant alternatif grâce auquel on obtient une régulation mieux stabilisée.

Afin de réaliser ceci suivant l'invention, le signal d'erreur précité est obtenu par la comparaison du signal d'onde rectangulaire présent avant le filtre à inductance-capacité de sortie du convertisseur de puissance courant continu/courant continu avec une valeur de référence fournie par une forme d'onde de référence, après quoi le signal de différence résultant de la comparaison est appliqué à un intégrateur dont le signal de sortie constitue le signal d'erreur requis.

Grâce à cette disposition, l'angle de déphasage du signal d'erreur qui est prélevé avant le filtre d'inductance-capacité est moins grand que pour le signal à la sortie dudit filtre et la régulation du système s'en trouve ainsi mieux stabilisée.

Un avantage suivant l'invention est l'obtention d'un convertisseur CC/CA présentant une structure plus simple.

Un avantage supplémentaire de l'invention est de réaliser un convertisseur du type précité qui peut fournir un courant alternatif de n'importe quelle forme d'onde.

Dans une première forme de réalisation possible l'intégrateur utilisé est un intégrateur passif à résistance et capacité, suivi par un réseau correcteur limitant la distorsion produite par cet intégrateur passif.

Dans une autre forme de réalisation l'intégrateur utilisé est du type actif et est constitué par un amplificateur associé à un réseau à résistance et capacité.

D'autres détails et particularités de l'invention apparaîtront de la description qui suit ci-après d'un convertisseur courant continu/courant alternatif pour des applications particulières selon l'invention.

Cette description est donnée exclusivement à titre d'exemple et ne limite nullement l'invention. Les références se rapportent aux dessins qui y sont annexés.

La figure 1 est un schéma-bloc d'un convertisseur courant continu/courant alternatif suivant l'invention.

La figure 2 est un schéma d'une première variante de réalisation d'un détail du convertisseur suivant l'invention.

La figure 3 est un schéma d'une seconde variante de réalisation d'un détail du convertisseur suivant l'invention.

La figure 4a présente un schéma des connections des enroulements d'un transformateur utilisé dans un convertisseur suivant l'invention.

La figure 4b est une représentation schématique de la disposition sur le noyau torique des enroulements selon la figure 4a.

La figure 5 illustre un schéma des connections des enroulements primaires du transformateur utilisé dans un convertisseur suivant l'invention.

La figure 6 est une vue en perspective schématique de deux enroulements primaires bobinés sur le noyau torique du transformateur.

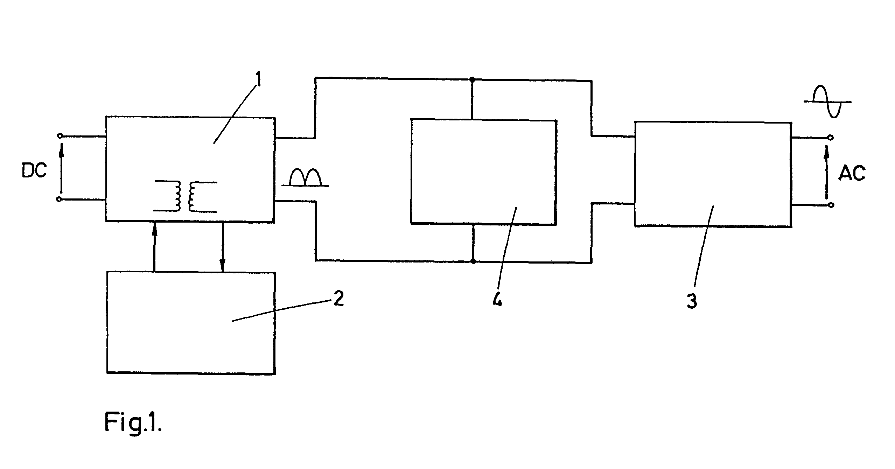

Dans le convertisseur courant continu/courant alternatif suivant l'invention illustré sous forme de blocs à la figure 1, le courant continu est appliqué à un convertisseur courant continu/courant continu commuté à modulation par impulsions de largeur variable (1) commandé par une unité de contrôle (2) afin de fournir à partir de la tension continue appliquée, une tension alternative, par exemple sinusoïdale, redressée. La tension est appliquée à un pont inverseur (3) afin d'obtenir le courant alternatif désiré.

Si l'on veut alimenter des charges réactives, on connecte en parallèle avec la sortie du convertisseur de puissance courant continu/courant continu à modulation par impulsions de largeur variable (1), un système de compensation ou de récupération de courant déwatté (4).

La séparation galvanique entre l'entrée en courant continu (CC) et la sortie en courant alternatif (CA) est assurée dans le convertisseur de puissance courant continu/courant continu (1) par un transformateur.

Le convertisseur de puissance est un convertisseur à double voie d'aller pourvu de transformateurs. Ceux-ci font monter la tension et font également office de séparation. On utilise comme éléments de commutation un ou plusieurs transistors métal-oxyde à effet de champ connectés en parallèle. Ceux-ci sont commandés à l'aide d'un circuit de commande. De manière générale, d'autres commutateurs, tels que des transistors, peuvent également être utilisés. Afin de maintenir la séparation galvanique entre côtés primaire et secondaire, les impulsions de commande provenant de l'unité de contrôle (2) sont amenés au circuit de commande par l'intermédiaire de coupleurs optiques (HCPL 2601). Le principe de base de ce convertisseur n'est pas nouveau et est décrit dans la littérature, par exemple Van Veltho-ven, 1978.

L'unité de contrôle (2) est montée autour d'un circuit intégré à modulation par impulsions de largeur variable, dans ce cas du type UC3524A, mais bien d'autres réalisations peuvent être utilisés. Ce circuit intégré contient entr'autres un oscillateur à dents de scie avec une période T réglable extérieurement. Au début de chaque période de commutation ce circuit intégré active tour à tour l'un des deux commutateurs dans la partie puissance par l'intermédiaire du circuit de commande. Le signal en dents de scie de l'oscillateur est également amené à l'entrée d'un comparateur (7). Si le signal à l'autre entrée du comparateur (7), appelé signal d'erreur, dépasse cette tension en dents de scie, le commutateur est de nouveau ouvert jusqu'à la fin de la période suivante.

Conventionellement, le signal d'erreur est obtenu en soustrayant la tension en sortie du convertisseur de la valeur de référence fournie par une forme d'onde de référence $V_{ref}$ (dans ce cas un sinus redressé).

Par la présence d'un filtre à inductance-capacité (8) dans le circuit de commande ce circuit n'est cependant stable que pour de petites valeurs du gain de circuit. En incorporant des réseaux de compensation, le gain de circuit peut être augmenté. Toutefois celui-ci ne peut, à une fréquence f, excéder $f_{LC}/f$, où $f_{LC}$ est la fréquence de résonance du filtre à inductance-capacité.

Un gain de circuit élevé suppose donc une valeur relativement grande pour $f_{LC}$, cependant au détriment de la suppression des harmoniques de commutation. A titre d'exemple on peut considérer une fréquence de commutation $f_S = 50$ kHz et $f_{LC} = 2$ kHz (suppression de la fréquence de commutation = 56 dB). A 100 Hz le gain de circuit vaut alors 26 dB, à 1 kHz encore 6 dB.

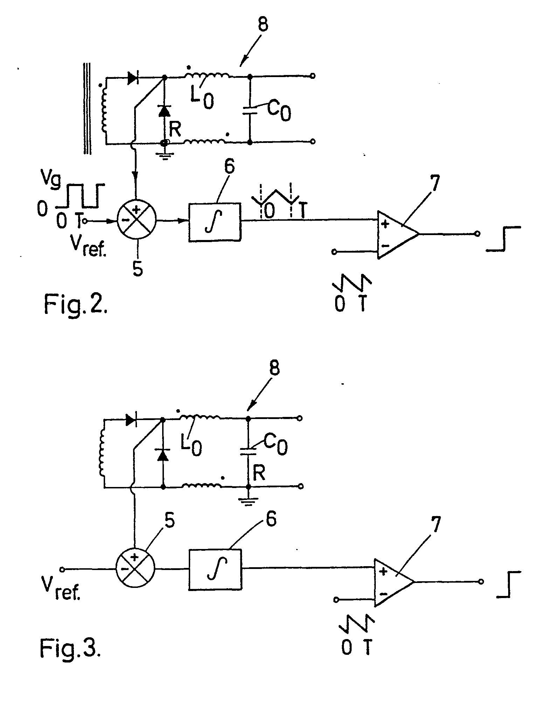

Dans le convertisseur CC/CA suivant l'invention, le signal d'erreur est obtenu de la manière indiquée suivant une première variante à la figure 2. Le signal rectangulaire présent avant le filtre à inductance et capacité LC est comparé en (5) à la valeur de référence et la différence résultante est intégrée dans l'intégrateur (6). Contrairement au circuit conventionnel il ne faut plus ajouter d'autres circuits de compensation. En outre, le gain de circuit à une fréquence f vaut à présent ($f_S/\pi f$).

Pour l'exemple susmentionné ceci signifie 18 dB de gain de circuit en plus. Si on désire obtenir le même gain de circuit avec un circuit de réaction conventionnel, la suppression de la fréquence de commutation ne vaudrait que 20 dB.

Le principe de la rétroaction du signal d'erreur tel que décrit ci-dessus, demande donc un montage considérablement moins compliqué. Etant donné que l'on ne doit pas faire face à des problèmes en rapport avec des instabilités, le choix des composantes est beaucoup moins critique, ce qui signifie une économie des coûts dans le processus de production.

En outre, la distorsion dans le signal de sortie est bien inférieur à cause du gain de circuit supérieur pouvant être réalisé.

Une autre variante de réalisation est illustrée à la figure 3. Elle diffère essentiellement de la forme de réalisation suivant la figure 2 par le déplacement du point de référence R. A présent celui-ci est situé en sortie du filtre LC, de telle sorte que le signal envoyé à la comparaison est constitué par un mélange du signal rectangulaire suivant la forme de réalisation correspondant à la figure 2 et du signal après filtrage.

L'intégrateur (6) peut être du type passif constitué par un réseau à résistance et capacité. Un tel intégrateur passif n'a pas un comportement idéal et entraîne une certaine distorsion dans le signal de sortie. Cette distorsion peut être compensée par un autre réseau à résistance et capacité, qui transforme le signal en dents de scie en un signal parabolique. On peut également faire appel à un intégrateur actif. Celui-ci est constitué autour d'un amplificateur avec un réseau à résistance et capacité. Il ne faut plus, dans ce cas, prévoir de compensation de la distorsion.

Le convertisseur continu/alternatif suivant l'invention n'est pas limité à la production d'une tension sinusoïdale. Il est parfaitement possible d'engendrer d'autres formes d'onde, telles que des ondes triangulaire, en dents de scie, rectangulaires, etc...., grâce à une adaptation de la forme d'onde de référence.

L'invention offre donc un nouveau circuit de commande avec pour propriétés:

1. très grande stabilité sans éléments compliqués;

2. gain en circuit ouvert supérieur par quoi la forme d'onde de référence est mieux suivie et l'influence de variations de tension d'entrée continue diminue;

3. nombre de composantes réduit;

4. formes de signal de sortie quelconques pouvant être fournies.

Le transformateur utilisé dans le convertisseur de puissance continu/alternatif doit présenter les propriétés suivantes:

1. résistance réduite pour les hautes et basses fréquences;

2. autoinduction de fuite très réduite;

3. autoinduction primaire relativement grande.

Ces propriétés sont atteintes de la meilleure façon en faisant appel à un transformateur à noyau torique.

Il est connu pour un transformateur avec un

rapport d'enroulement $N_2/N_1 = N$ de diviser le premaire P en N primaires qui sont enroulés les uns à côté des autres et puis connectés en parallèle. Après l'application de l'isolation, on superpose l'enroulement secondaire S. De pareille manière, l'on a également des diamètres de fil égaux pour les enroulements primaire et secondaire. Les compléments suivants offrent une amélioration supplémentaire aux points 1 et 2. En outre, nous proposons encore une méthode qui simplifie le procédé d'enroulement.

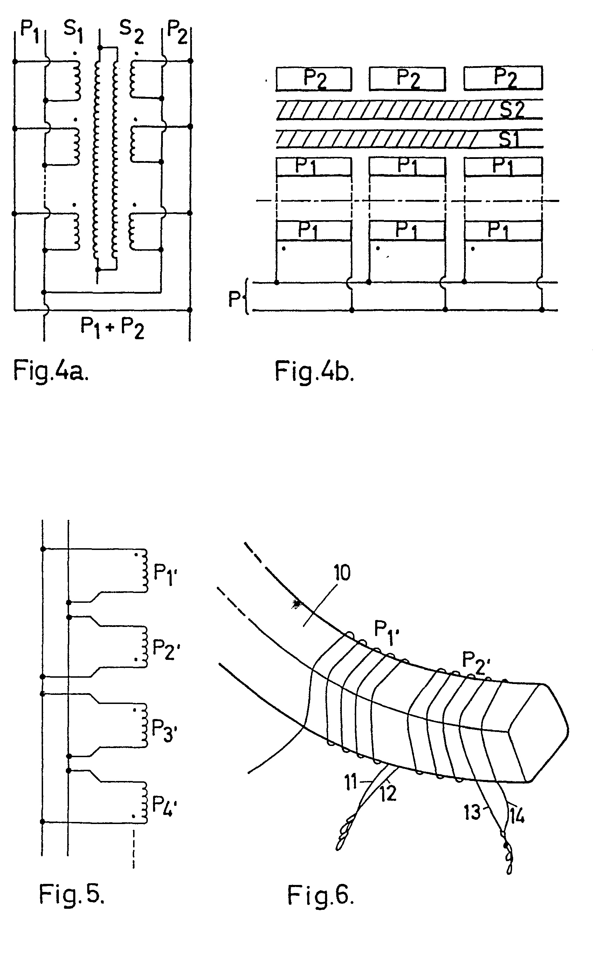

Il est également connu de réduire l'induction de fuite grâce à un enroulement alterné l'un sur l'autre d'un enroulement primaire et d'un enroulement secondaire. Comme séquence possible, on a par exemple PSP et PSPS (P = primaire et S = secondaire). On se limitera ici à quatre couches, mais le procédé est général. On partira de la séquence PSP. D'une façon classique, la section en cuivre S doit être égale à la somme des deux primaires afin de maintenir la résistance aussi faible que se peut. Si l'on procède ainsi, le fil secondaire est plus gros que le primaire et lors de l'enroulement, le noyau (10) n'est pas complètement recouvert sur son pourtour. L'invention consiste à remplacer l'enroulement S du milieu par deux enroulements parallèles SS, figure 4.

Ceci présente les avantages suivants:

1. l'autoinduction de fuite est inférieure;

2. le rapport entre induction primaire et l'induction de fuite est supérieur à 20000;

3. la résistance haute fréquence est encore inférieure;

4. les diamètres des fils des secondaires sont ramenés à ceux des primaires;

5. la capacité entre primaire et secondaire est moins élevée pour la configuration PSSP que pour une configuration PSPS similaire, qui est équivalente sur le plan de la dispersion;

6. Seules deux isolations sont nécessaires entre P et S; l'isolation entre SS peut être beaucoup plus fine. Dans le cas PSPS, il n'en est pas ainsi et pour cette raison la hauteur d'enroulement totale augmente, de même que l'autoinduction de dispersion et la résistance.

Puisque les diamètres des fils secondaire comme primaire sont égaux, cela signifie non seulement une économie des coûts à l'achat de fil mais également un gain de temps lors du processus de production, comme la machine à enrouler peut rester chargée avec le même diamètre de fil.

L'invention concerne aussi l'élimination d'un problème rencontré lors de la fabrication pratique des transformateurs requis.

Les transformateurs décrits ci-dessus consistent, pour un rapport d'enroulement N, en principe, en N primaires, où N est arrondi à une valeur entière. La figure 5 illustre que chaque enroulement fair ressortir deux fils vers l'extérieur. Pour N primaires, il y a dont 2N fils dont N sont reliés entr'eux et donnent le début du primaire; les N fils restants sont également reliés entr'eux et donnent la fin du primaire. Les fils que doivent être reliés entr'eux sont dispersés dans l'espace et cela donne une connection difficile.

Ci-après on montre comment il est possible de réduire le nombre de fils de connection d'un facteur 2. La figure 5 illustre le principe. Lors de l'enroulement de $P_1'$, on pose le fil sur le noyau (10), par exemple dans le sens des aiguilles d'une montre. En terminant le primaire $P_1'$, on fait ressortir l'extrémité (11) du fil vers l'extérieur. Au lieu de sectionner (11) à la longueur désirée, il est ramené sur le noyau (10) comme début (12) du primaire $P_2'$ et à présent l'on pose (12) dans le sens inverse des aiguilles d'une montre sur le noyau. De manière analogue on amène (13) vers l'extérieur et (13) est utilisé comme début (14) de $P_3'$ qui est à nouveau enroulé dans le sens des aiguilles d'une montre. La figure 6 donne un croquis qui illustre la méthode dans l'espace, où, en revanche, $P_3'$ n'a pas été représenté.

Généralité: les constructions décrites ci-dessus sont utilisables pour des transformateurs haute fréquence mais elles peuvent aussi être appliquées pour tous les transformateurs à noyau torique où une autoinduction de fuite et résistance réduites sont importantes.

Conclusion: ce transformateur a pour propriétés:

résistance et autoinduction de fuite réduites;

grosseurs de fils égales pour les enroulements primaire et secondaire;

connections réduites de moitié;

capacité entre les enroulements réduite.

## Revendications

1. Convertisseur courant continu/courant alternatif pour application indépendante, comportant un convertisseur de puissance commuté courant continu/courant continu à modulation par impulsions de largeur variable commandé par une unité de contrôle de manière à appliquer à partir d'une tension continue, une tension sinusoîdale redressée à un pont redresseur pour obtenir le courant alternatif désiré, le convertisseur continu/continue commuté contenant un transformateur d'isolement avec des enroulements primaires et secondaires, en particulier du type hautes fréquences et comprenant un filtre inductance-capacité (8), et l'unité de contrôle (2) comprenant un oscillateur fournissant une tension en dents de scie de période réglable, pouvant être commandée extérieurement, et qui commande alternativement les éléments de commutation du convertisseur de puissance continu/continu (1), le signal de sortie de cet oscillateur étant également appliqué à une entrée d'un comparateur (7) dont l'autre entrée reçoit un signal d'erreur, le signal de sortie de ce comparateur (7) provoquant, lors du dépassement du signal en dents de scie par le signal d'erreur, l'ouverture de l'élément de commutation formé à ce moment dans le convertisseur de puissance continu/continu (1) jusqu'à la fin de la période suivante, caractérisé en ce que le signal d'erreur précité est obtenu par la comparaison du signal d'onde rectangulaire présent avant le filtre inductance-capacité de sortie (8) du convertisseur de puissance continu/continu (1) avec une valeur de référence fournie par une forme d'onde de référence, après quoi le signal de différence résultant de la comparaison est appliqué à un intégrateur (6) dont le signal de sortie constitue le signal d'erreur requis.

2. Convertisseur selon la revendication 1, caractérisé en ce que l'intégrateur utilisé (6) est du type passif à résistance et capacité, suivi par un réseau correcteur limitant la distorsion produite par cet intégrateur passif (6).

3. Convertisseur selon la revendication 1, caractérisé en ce que l'intégrateur utilisé (6) est un intégrateur actif constitué par un amplificateur combiné à un réseau à résistance et capacité.

4. Convertisseur selon l'une quelconque des revendications 1 à 3, caractérisé en ce que le signal d'onde rectangulaire précité, présent avant le filtre à inductance et capacité (8), est combiné avec un signal présent après ce filtre pour être appliqué à l'intégrateur précité (6), en connectant la sortie du filtre à inductance et capacité (8) a un point de référence (R).

5. Convertisseur selon l'une quelconque des revendications 1 à 4, caractérisé en ce que la forme d'onde du courant alternatif de sortie est déterminée par le choix de la forme d'onde de référence utilisée pour produire la forme d'onde de référence appliquée au comparateur (7) précité, par exemple sinusoîdale, carrée, triangulaire, etc.

6. Convertisseur selon l'une quelconque des revendications 1 à 5, caractérisé en ce que le transformateur précité contient N enroulements primaires sur un noyau torique (10), l'enroulement secondaire étant constitué par N enroulements partiels connectés en parallèle, avec un fil de diamètre égal à celui du fil des enroulements primaires.

7. Convertisseur selon la revendication 6, caractérisé en ce que les enroulements primaires sont constitués par des bobinages dont le sens d'enroulement est à chaque fois inversé, ce qui permet de laisser les extrémités adjacentes (11), (12) et (13), (14) des bobinages connectées entr'elles, tout en offrant une inductance de fuite et une résistance réduites, et les connections diminuant de moitié.

## Patentansprüche

1. Gleichstrom-/Wechselstromwandler zur unabhängigen Verwendung, der einen polgewendeten Gleichstrom/Gleichstrom-Leistungswandler zur Modulation durch Impulse variabler Breite umfaßt, der von einer Steuereinheit derart gesteuert wird, daß er ausgehend von einer Gleichspannung eine gleichgerichtete Sinusspannung an eine Gleichrichterbrücke, anlegt, um den gewünschten Wechselstrom zu erhalten, wobei der polgewendete Gleichstrom/Gleichstromwandler einen Trenntransformator mit primären und sekundären Wicklungen insbesondere der Hochfrequenzsorte enthält und ein Induktanz-Kapazitätsfilter (8) aufweist, wobei die Steuereinheit (2) einen Oszillator umfaßt, der eine Sägezahnspannung regelbarer Periode liefert, die von außen gesteuert werden kann und die abwechselnd die Kommutatorelemente des Gleichstrom/Gleichstrom-Leistungswandlers (1) steuert, wobei das Ausgangssignal dieses Oszillator ebenfalls an einen Eingang eines Komparators (7) angelegt wird, dessen anderer Eingang ein Fehlersignal empfängt, wobei das Ausgangssignal dieses Komparators (7) bei einem Übertreffen des Sägezahnsignals durch das Fehlersignal die Öffnung des Kommutatorelements, das zu diesem Zeitpunkt im Gleichstrom/Gleichstrom-Leistungswandler (1) gebildet wird, bis zum Ende der folgenden Periode bewirkt, dadurch gekennzeichnet, daß das obengenannte Fehlersignal aus dem Vergleich des Rechtecksignals, das vor dem Induktanz-Kapazitätsfilter des Ausganges des Gleichstrom/Gleichstrom-Leistungswandlers (1) vorhanden ist, mit einem Referenzwert, der durch eine Form einer Referenzwelle gegeben wird, erhalten wird, wonach das aus dem Vegleich resultierende Differenzsignal an einen Integrator (6) angelegt wird, dessen Ausgangssignal das erforderliche Fehlersignal darstellt.

2. Wandler nach Anspruch 1, dadurch gekennzeichnet, daß der verwendete Integrator (6) vom passiven Typ mit Widerstand und Kapazität ist, dem ein Korrekturnetzwerk folgt, das die durch diesen passiven Integrator (6) erzeugte Verzerrung begrenzt.

3. Wandler nach Anspruch 1, dadurch gekennzeichnet, daß der verwendete Integrator (6) ein aktiver Integrator ist, der aus einem mit einem Widerstands- und Kondensatornetzwerk verbundenen Verstärker besteht.

4. Wandler nach einem der Ansprüche 1 bis 3, dadurch gekennzeichnet, daß das obengenannte Rechteckwellensignal, das vor dem Induktanz-Kapazitätsfilter (8) vorhanden ist, mit einem nach diesem Filter vorhandenen Signal kombiniert wird, um an den obengenannten Integrator (6) angelegt zu werden, indem der Ausgang des Induktanz-Kapazitätsfilters (8) mit einem Referenzpunkt (R) verbunden wird.

5. Wandler nach einem der Ansprüche 1 bis 4, dadurch gekennzeichnet, daß die Wellenform des Ausgangswechselstroms durch die Wahl der Referenzwellenform bestimmt wird, die zum Erzeugen der an den obengenannten Komparator (7) angelegten Referenzwellenform verwendet wird, zum Beispiel sinusförmig, rechteckförmig, dreieckförmig u.s.w.

6. Wandler nach einem der Ansprüche 1 bis 5, dadurch gekennzeichnet, daß der obengenannte Transformator N Primärwicklungen auf einem torusförmigen Kern (10) aufweist, wobei die Sekundärwicklung aus N partiellen, parallel geschalteten Wicklungen mit einem Draht mit demselben Durchmesser wie der des Drahtes der Primärwicklungen besteht.

7. Wandler nach Anspruch 6, dadurch gekennzeichnet, daß die Primärwicklungen aus Spulen bestehen, deren Wicklungsrichtung jedesmal umgekehrt ist, was ermöglicht, die aneinanderstoßenden Enden (11), (12) und (13), (14) untereinander verbunden zu lassen, wobei die Streuinduktanz und der Widerstand verringert und die Verbindungen um die Hälfte reduziert werden.

## Claims

1. D.C./A.C. converter for independent application, comprising a D.C./D.C. switched power converter with modulation by pulses of variable width, controlled by a monitor unit in such manner as to apply, from a D.C. voltage, a rectified sinusoidal voltage to a rectifier bridge in order to obtain the desired alternating current, the switched D.C./D.C. converter containing an insulating transformer with primary and secondary windings, in particular of the high frequency type comprising an inductance-capacitance filter (8), and the monitor unit (2) comprising an oscillator supplying a saw-tooth voltage of regulable period, which can be controlled externally and which alternately controls the switching elements of the D.C./D.C. power converter (1), the output signal of this converter being likewise applied to one input of a comparator (7) the other input of which receives an error signal, the output signal of this comparator (7) causing, on exceeding of the saw-tooth signal by the error signal, the opening of the switching element formed at this moment in the D.C./D.C. power converter (1) until the end of the following period, characterised in that the said error signal is obtained by the comparison of the square-wave signal present before the inductance/capacitance output filter (8) of the D.C./D.C. power converter (1) with a reference value supplied by a reference wave form, whereafter the difference signal resulting from the comparison is applied to an integrator (6), the output signal of which constitutes the required error signal.

2. Converter according to Claim 1, characterised in that the integrator (6) utilised is of the resistance and capacitance passive type, followed by a corrector network limiting the distortion produced by this passive integrator (6).

3. Converter according to Claim 1, characterised in that the utilised integrator (6) is an active integrator constituted by an amplifier combined with a resistance and capacitance network.

4. Converter according to any one of Claims 1 to 3, characterised in that the said square-wave signal, present before the inductance and capacitance filter (8), is combined with a signal present after this filter in order to be applied to the said integrator (6), by connecting the output of the inductance and capacitance filter (8) to a reference point (R).

5. Converter according to any one of Claims 1 to 4, characterised in that the wave form of the output alternating current is determined by the choice of the reference wave form utilised to produce the reference wave form applied to the said comparator (7), for example sinusoidal, square, triangular, etc.

6. Converter according to any one of Claims 1 to 5, characterised in that the said transformer contains N primary windings on a toric core (10), the secondary winding being constituted by N partial windings connected in parallel, with a wire of diameter equal to that of the wire of the primary windings.

7. Converter according to Claim 6, characterised in that the primary windings are constituted by coils the winding direction of which is reversed each time, which permits of leaving the adjacent extremities (11), (12) and (13), (14) of the coils interconnected, while offering a reduced leakage inductance and resistance, and the connections reducng by half.

Fig.1.

8

$L_0$

$C_0$

R

$V_g$

0

0 T

$V_{ref.}$

5

6

$\int$

0 T

7

+

−

0 T

**Fig.2.**

8

$L_0$

$C_0$

R

5

+

−

6

$\int$

7

+

−

$V_{ref.}$

0 T

**Fig.3.**

Fig.4a.

Fig.4b.

Fig.5.

Fig.6.